# EUROPEAN PATENT SPECIFICATION

(11) **EP 1 237 446 B1**
(45) Date of publication and mention of the grant of the patent: **28.05.2003**
(21) Application number: 00981184.5
(22) Date of filing: 08.12.2000
(51) Int. Cl.: A47J 27/21, H01R 13/42

(54) **PLUG FOR A COFFEE-MAKING APPARATUS AND MEANS FOR FASTENING SUCH A PLUG**
STECKER FÜR EINE KAFFEEMASCHINE UND KORRESPONDIERENDEN BEFESTIGUNGSELEMENTEN
PRISE POUR MACHINE A CAFE ET ELEMENTS DE FIXATION CORRESPONDANTS

(30) Priority: 16.12.1999 DK 180599
(43) Date of publication of application: 11.09.2002
(73) Proprietor: PI-DESIGN AG, 6234 Triengen (CH)
(72) Inventor: JOERGENSEN, Carsten, CH-6005 St. Niklausen (CH)
(74) Representative: Stellinger, Jens-Holger
(86) International application number: PCT/DK00/00681
(87) International publication number: WO 01/043606

(56) References cited:
- WO-A2-00/24300
- WO-A2-99/48333
- GB-A- 2 306 801
- GB-A- 2 307 602
- US-A- 5 971 810

## Description

### Scope of the invention

This invention relates to a power consumer with a plug, in particular a coffee-making apparatus, and means for fastening such a plug in the power consumer. Plugs of this kind are known from WO-A-9 948 333 and GB-A-2 207 602.

### State of art

Such plugs are known from so-called cordless kettles, where they are fitted on the bottom of the kettle, where they have been placed with a view to being joined with a corresponding part in a base which constitutes the galvanic connection to the supply circuit.

However, such plugs involve a series of drawbacks, insofar as they are generally laborious to mount. Moreover, they require the use of special tools and a not insignificant time expenditure.

### Objective of the invention

Consequently, the basis for this invention is the object of providing a plug of the type mentioned in the introduction where mounting and assembly is simple and can be carried out without the use of tools, and where time expenditure is relatively low. However, it should also be possible to use the same method of assembly on the base, where the counterpart of the plug is to be fitted.

According to the principles of the present invention, this objective is met by a plug of the type mentioned in the introduction where the plug is positioned centrally in a recess in the bottom of the power consumer and rests in a flange 8 at the edge of the recess 7, thus allowing rotation around an axis perpendicular to the bottom, and where the plug also comprises a number of fish plates, which by rotating the plug can be led in under a corresponding number of hooks which from a position inside the bottom of the power consumer are available for fastening and locking the fish plates on the plug.

With a plug according to the principles of the present invention, it is possible to fit it to the bottom of the power consumer by means of a simple turning movement, without the use of tools and with highly limited time expenditure. This means that such production is suitable for robotic assembly, a fact which renders production even less costly.

In a advantageous embodiment of the plug according to the principles of the present invention, a spring-like lock is suggested between the fish plates and hooks.

Further advantageous designs of the invention appear from the dependent claims.

### Short description of the drawings

The drawing depicts an embodiment according to the principles of the present invention. In this drawing:
- FIG. 1: depicts a cross-sectional view of the plug according to the principles of the present invention;

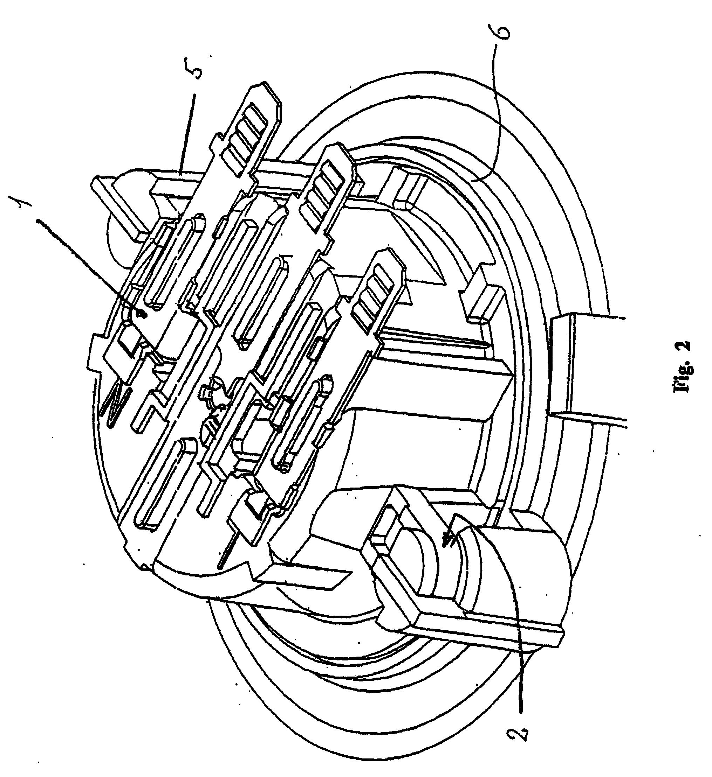

- FIG. 2: shows a perspective of the plug according to the principles of the present invention, seen from the inside.

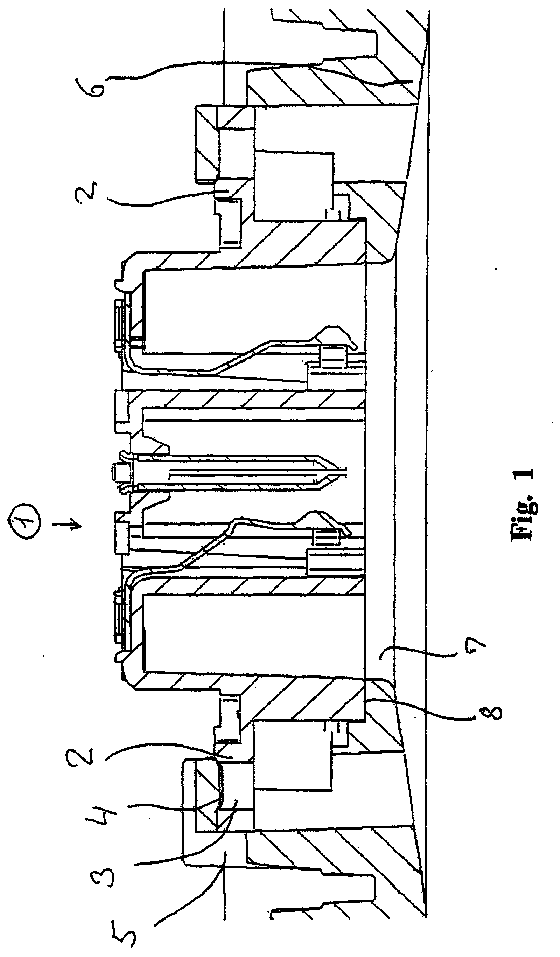

FIG. 1 depicts a cross-sectional view of the plug according to the principles of the present invention, where the central part comprises a known plug. Moreover, the Figure shows a fish plate 2 on each side of the central part; these fish plates 2 extend radially. At the tip of each fish plate 2 is a boring 3 or a recess, which corresponds to a downward protuberance 4 on the underside of the hook 5, which is found on the inside of the bottom 6, where the plug is fitted.

The plug 1 is placed outside a recess 7 which forms the lower flange 8 for the plug 1.

The fish plates 2 have been designed to withstand the bending stresses which will affect them during assembly or disassembly. This entails that in a cross-sectional view or tangentially, the fish plates 2 extend relatively widely in relation to the direction of the turn of the plug.

Similarly, the hooks 5 have been designed to withstand the torsion stresses which will affect them during assembly or disassembly. This means that in a cross-sectional view or tangentially, the hooks 5 extend relatively widely in relation to the direction of the turn of the plug.

At the outer end of each fish plate 2 is a boring 3 or a recess designed to hold a protuberance 4 on the corresponding hook 5. This renders it possible to establish a spring lock to firmly hold the plug 1.

The embodiment shown is an example only and is not limited to that which is depicted in the drawings, as the number of fish plates and hooks can be selected according to the exact circumstances.

## Claims

1. A power consumer with a plug, in particular a coffee-making apparatus, and means for fastening such a plug in the power consumer, where the plug (1) is positioned centrally in a recess (7) in the bottom (6) of the power consumer and rests in a flange (8) at the edge of the recess (7), thus allowing rotation around an axis perpendicular to the bottom (6), **characterised in that** the plug (1) also compreses a number of fish plates (2) on its sides, which by rotating the plug (1) can be led in under a corresponding number of hooks (5) which from a position inside the bottom (6) of the power consumer are available for fastening and locking the fish plates (2) on the side of the plug (1).

2. A power consumer with a plug according to claim 1, **characterised in that** the fish plates (2) and hooks (5) have been arranged in such a way as to lock in a spring-like manner.

3. A power consumer with a plug according to claim 1 and 2, **characterised in that** the fish plates (2) extend relatively widely across the plug (1).

4. A power consumer with a plug according to claim 1, **characterised in that** the hooks (5) extend relatively widely across the plug (1).

## Patentansprüche

1. Leistungsverbraucher mit einem Stecker, insbesondere Kaffeemaschine, und Mitteln zum Befestigen eines Steckers in dem Leistungsverbraucher, wobei der Stecker (1) zentral in eine Aussparung (7) im Boden (6) des Leistungsverbrauchers positioniert ist und gegen einen Flansch (8) an einer Kante der Aussparung (7) anliegt, so dass eine Drehung um eine Achse rechtwinklig zu dem Boden (6) ermöglicht ist, **dadurch gekennzeichnet, dass** der Stecker (1) eine Anzahl von Laschen (2) an seinen Seiten aufweist welche durch Drehung des Steckers 1 unter eine entsprechende Anzahl von Haken (5) geführt werden können, die von einer Stellung innerhalb des Bodens (6) des Leistungsverbrauchers erreichbar sind zur Befestigung und Verriegelung der Laschen (2) an der Seite des Steckers (1).

2. Leistungsverbraucher mit einem Stecker nach Anspruch 1, **dadurch gekennzeichnet, dass** die Laschen (2) und die Haken (5) in einer solchen Weise angeordnet sind, dass sie in einer federartigen Weise verriegeln.

3. Leistungsverbraucher mit einem Stecker nach Anspruch 1 und 2, **dadurch gekennzeichnet, dass** die Laschen (2) sich relativ weit über den Stecker (19 erstrecken.

4. Leistungsverbraucher mit einem Stecker nach Anspruch 1, **dadurch gekennzeichnet, dass** die Haken (5) sich relativ weit über den Stecker (1) erstrecken.

## Revendications

1. Appareil consommateur de courant muni d'une prise, en particulier cafetière, et moyen pour fixer cette prise dans l'appareil consommateur de courant, la prise (1) étant positionnée centralement dans une cavité (7) ménagée dans la partie inférieure (6) de l'appareil consommateur de courant et reposant sur une embase (8) située au niveau du bord de la cavité (7) pour pouvoir ainsi tourner sur un axe perpendiculaire à la partie inférieure (6), **caractérisé en ce que** la prise (1) comprend également un certain nombre d'éclisses (2) situées sur ses côtés et qui, lorsqu'elle tourne, peuvent être avancées sous un nombre correspondant de crochets (5) prévus pour, à partir d'une position située à l'intérieur de la partie inférieure (6) de l'appareil consommateur de courant, fixer et verrouiller les éclisses (2) sur les côtés de la prise (1).

2. Appareil consommateur de courant muni d'une prise selon la revendication 1, **caractérisé en ce que** les éclisses (2) et les crochets (5) sont conçus pour être verrouillés de manière élastique.

3. Appareil consommateur de courant muni d'une prise selon les revendications 1 et 2, **caractérisé en ce que** les éclisses (2) s'étendent relativement largement dans une direction transversale à la prise (1).

4. Appareil consommateur de courant muni d'une prise selon la revendication 1, **caractérisé en ce que** les crochets (5) s'étendent relativement largement dans une direction transversale à la prise (1).
